# EUROPÄISCHE PATENTSCHRIFT

(11) **EP 0 680 900 B1**
(45) Veröffentlichungstag und Bekanntmachung des Hinweises auf die Patenterteilung: **12.11.1997**
(21) Anmeldenummer: 95106607.5
(22) Anmeldetag: 03.05.1995
(51) Int. Cl.: B65G 47/90

(54) **Vorrichtung und Betriebsweise zum Greifen von Körpern, vorzugsweise von zylindrischen Körpern**
Device and operational instructions to grip a body, preferably a cylindrical body
Dispositif et mode de fonctionnement pour saisir des corps, de préférence des corps cylindriques

(30) Priorität: 06.05.1994 CH 1423/94
(43) Veröffentlichungstag der Anmeldung: 08.11.1995
(73) Patentinhaber: Marti Dytan AG, 6048 Horw (CH)
(72) Erfinder: Frerker, Johannes, CH-6010 Kriens (CH)
(74) Vertreter: Zeller, Joseph

(56) Entgegenhaltungen:
- DE-A- 3 741 257
- DE-U- 8 705 814
- PATENT ABSTRACTS OF JAPAN vol. 10 no. 126 (M-477) [2183] ,10.Mai 1986 & JP-A-60 252532 (MATSUSHITA DENKO) 13.Dezember 1985,

## Beschreibung

Die Erfindung betrifft eine Vorrichtung zum Greifen von Körpern gemäss dem Oberbegriff von Anspruch 1 und eine Betriebsweise zum Anhängen von Körpern.

Zum Aufnehmen von Körpern mittels einem Kran sind verschiedenste Greifvorrichtungen bekannt. Je nach der geometrischen Form des aufzunehmenden Körpers werden die Aufnahme- oder Greifvorrichtungen gestaltet. Beim Aufnehmen von Körpern, z.B. vom Boden einer Werkstatt, sind in der Regel keine räumlichen Einschränkungen vorhanden und die Greifelemente können frei gestaltet werden. Bei engen Platzverhältnissen, wenn z.B. ein Wechselteil aus einer Maschine herausgehoben werden muss, sind solche allgemeine Greifeinrichtungen nicht geeignet. Auch ist in der Regel der Automatisierungsgrad für ein sicheres automatisches Aufnehmen und Ablegen nicht gewährleistet.

Aus der CH-PS 642 324 ist eine Vorrichtung zum Greifen und Ablegen von Körpern, insbesondere von zylindrischen Körpern mit horizontaler Längsachse, bekannt. Die Vorrichtung besteht aus einem Greifergehäuse mit einer nach unten gerichteten gabelförmigen Oeffnung zum Uebergreifen des Körpers. Im Greifergehäuse ist ein in Hubrichtung verschiebbares, aus zwei Zangenbacken bestehendes Greifelement geführt. Bei einer Hubbewegung werden die Zangenbacken in das Greifergehäuse hineingezogen und dabei gleichzeitig geschlossen. Anschliessend kann das Werkstück angehoben werden. Diese Vorrichtung zum Greifen ist mit verschiedenen Nachteilen behaftet. Sowohl beim Aufnehmen wie beim Ablegen des Werkstückes ist das verschiebbare Greifelement von Hand zu betätigen. Im weiteren sind zwischen dem Greifelement und dem Greifergehäuse bei leicht schrägem Hub Verklemmungen möglich, die die notwendige Sicherheit beeinträchtigen.

Der Erfindung liegt die Aufgabe zu Grunde, einen Greifer zu schaffen, der insbesondere in etwa horizontaler Lage sich befindende zylindrische Körper automatisch aufnehmen kann, in der x- und z-Achse kleinstmögliche Abmessungen aufweist und mit hohem Sicherheitsstandard die Körper transportieren kann. Er soll aus Maschinen auch Tambouren und Rollen bei engen Platzverhältnissen aus- und einbauen können. Im weiteren soll der Greifer auch bei nicht mittiger Stellung über der Last oder bei nicht genau horizontaler Lage der Last ein sicheres, automatisches Aufnehmen und Ablegen der Last gewährleisten. Auch soll der Greifer möglichst wenig bewegliche Teile aufweisen und dadurch gegen Störungen und Ueberlastungen unempfindlich sein und eine hohe Unfallsicherheit gewährleisten.

Nach der Erfindung werden diese Zielsetzungen durch die Summe der Vorrichtungsmerkmale von Anspruch 1; die Verwendung der Vorrichtung wird im Anspruch 11 definiert.

Je nach Zugänglichkeit und Form des aufzuhebenden Körpers im Greifbereich wird der Verschwenkradius und der Verschwenkweg des Segmentschiebers festgelegt. Gemäss einem vorteilhaften Ausführungsbeispiel wird der Segmentschieber mit einem Verschwenkweg von 180° versehen.

Am Segmentschieber kann beispielsweise ein Zahnsegment angebracht werden, das mit einem Zahnradantrieb zusammenwirkt. Auch andere bekannte Antriebsarten für die Verschwenkbewegung sind denkbar. Nach einem vorteilhatten Ausführungsbeispiel wird in einer kreisförmigen Peripherienut des Segmentschiebers eine an beiden Enden des Segmentschiebers befestigte Antriebskette geführt und über Umlenkräder mit einem angetriebenen Kettenrad verbunden.

Zur Erhöhung der Sicherheit wird auf einer inneren Lasttragfläche des Segmentschiebers ein Hebelsystem angeordnet, das sich beim Anheben des Körpers waagebalkenartig verschwenkt und dabei eine mechanische Verriegelung der Schliessposition des Segmentschiebers betätigt.

Zur Feststellung der Lage des aufzuhebenden Körpers innerhalb der gabelförmigen Oeffnung kann eine mechanische, elektromagnetische oder eine Laserstrahl-Messvorrichtung vorgesehen und mit einem Schaltelement verbunden werden. Nach einem weiteren Ausführungsbeispiel wird vorgeschlagen, als Schaltelement für den Antrieb des Segmentschiebers einen vertikal bewegbaren Abtaststiff zu verwenden, der auf der vertikalen Mittelachse der gabelförmigen Oeffnung angeordnet ist und in diese hineinragt.

Bei Stromausfall kann mittels aufsteckbarer Handkurbel der Greifer geöffnet bzw. geschlossen werden (Bremse ist geöffnet arretierbar). Eine Rutschkuppplung zwischen Antriebsvorrichtung und Antriebswelle der Kette schützt den Greiferantrieb vor unvorhergesehener Ueberbelastung.

Optimale Grössenverhältnisse zwischen der gabelförmigen Oeffnung und der Breite des Greifergehäuses werden erreicht, wenn die Breite der gabelförmigen Oeffnung mindestens 40 % der Breite des Greifergehäuses beträgt, oder dass das Verhältnis der Breite der gabelförmigen Oeffnung zum Aussendurchmesser des Segmentschiebers 1 : 1,4 bis 1 : 1,7 beträgt.

Zum Aufnehmen und Ablegen von relativ langen Körpern, wie Walzen etc., wird nach einem weiteren Ausführungsbeispiel vorgeschlagen, an den beiden Stirnseiten eines Hebebalkens je eine Greifvorrichtung anzubringen, deren Segmentschieber über eine gemeinsame Antriebswelle, die im Hohlraum des Hebebalkens angeordnet ist, antreibbar sind.

Im nachfolgenden soll anhand von Figuren die Erfindung weiter erläutert werden.

Dabei zeigen
- Fig. 1: eine Ansicht, teilweise im Schnitt, durch ein Greifergehäuse und
- Fig. 2: eine Seitenansicht eines Hebebalkens mit je einer Greifvorrichtung.

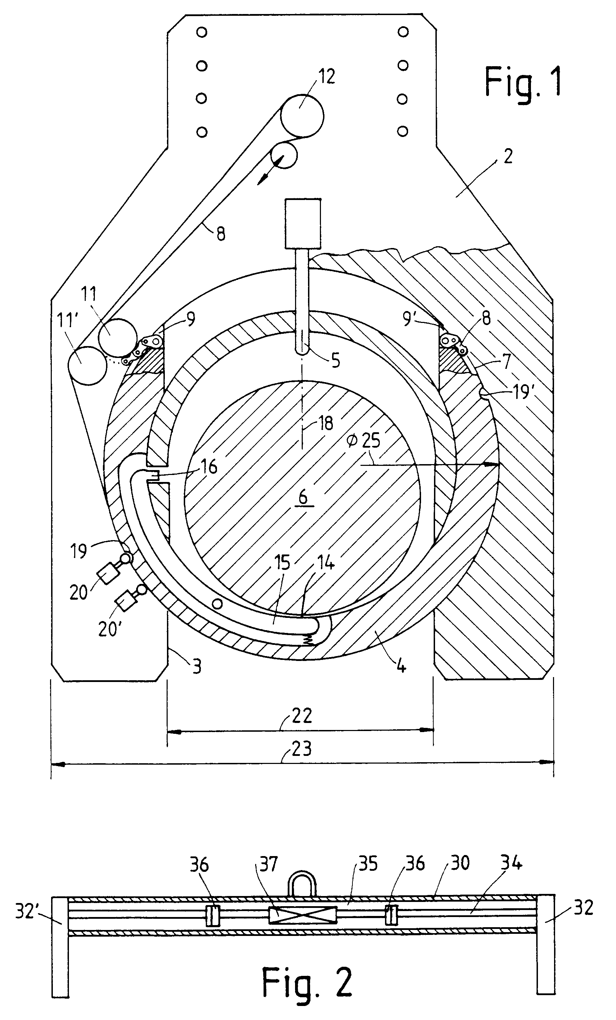

In Fig. 1 ist mit 2 ein Greifergehäuse bezeichnet, das eine nach unten gerichtete gabelförmige Oeffnung 3 aufweist. Diese Oeffnung 3 ist dafür vorgesehen, das Greifergehäuse 2 beim Absenken an einem Körper 6 zu führen und gleichzeitig gabelförmig zu umgreifen. Die Oeffnung 3 ist bei der dargestellten Betriebsstellung durch einen im Greifergehäuse 2 geführten Segmentschieber 4 verschlossen. Der Segmentschieber 4 stellt das Tragelement für den Körper 6 dar. Mit 5 ist ein in der gabelförmigen Oeffnung 3 angeordnetes Schaltelement dargestellt, das auf eine vertikale Relativbewegung zwischen dem Greifergehäuse 2 und dem Körper 6 anspricht. Das Schaltelement 5 steuert die Schliess- und die Oeffnungsbewegung des Segmentschiebers 4, die in diesem Beispiel 180° beträgt.

Für die Verschwenkbewegung des Segmentschiebers 4 ist ein Antrieb mit einem Kettenrad 12 und einer Kette 8 vorgesehen. Die Kette 8 ist an beiden Enden 9, 9' am Segmentschieber 4 angelenkt und in einer Nut an der kreisförmigen Peripherie 7 des Segmentschiebers 4 geführt. Ueber Umlenkräder 11, 11' wird die Kette zum angetriebenen Kettenrad 12 geführt, das sich aus Platzgründen oberhalb der gabelförmigen Oeffnung befindet. Auf einer inneren Lasttragfläche 14 des Segmentschiebers 4 ist ein Hebelsystem 15 angeordnet. Beim Anheben des Körpers 6 verschwenkt der Hebel waagebalkenartig und betätigt eine mechanische Verriegelung 16 in der Schliessposition des Segmentschiebers 4.

Das Schaltelement 5 ist in diesem Beispiel als vertikal bewegbarer Abtaststift ausgeführt, der auf der vertikalen Mittelachse 18 der gabelförmigen Oeffnung 3 angeordnet ist und in diese hineinragt. Im weiteren sind an der Peripherie 7 des Segmentschiebers 4 Vertiefungen 19, 19' angebracht, die mit Endschaltern 20, 20' zusammenwirken und die Auf- und Zustellung des Segmentschiebers 4 überwachen können.

Zur Sicherstellung einer guten Zugänglichkeit bei engen Platzverhältnissen und gleichzeitig einer vollen Automatisierung der Aufnahme- und Absetzoperation sind einige Baumasse von Bedeutung. Die Breite 22 der gabelförmigen Oeffnung 3 soll mindestens 40 % der Breite 23 des Greifergehäuses 2 betragen. Das Verhältnis der Dicke des Greifers zur gabelförmigen Oeffnung 3 soll ungefähr 1 : 8 sein. Das Verhältnis der Breite 22 der Oeffnung 3 zum Aussendurchmesser 25 des Segmentschiebers 4 wird 1 : 1,4 bis 1 : 1,7 gewählt.

In Fig. 2 ist mit 30 ein Hebebalken bezeichnet, der auf jeder Stirnseite mit je einer Greifvorrichtung 32, 32' versehen ist. Die Segmentschieber 4 jeder Greifvorrichtung 32, 32' sind über einen gemeinsamen Antrieb 37 und mittels einer gemeinsamen Antriebswelle 34, die im Hohlraum 35 des Hebebalkens 30 angeordnet ist, verschwenkbar. Bei Stromausfall kann der Segmentschieber 4 notfallmässig auch mit einer Handkurbel betätigt werden.

Die Betriebsweise zum Aufnehmen des Körpers 6 läuft wie folgt ab: Die gabelförmige Oeffnung 3 wird über dem Körper 6 soweit abgesenkt, bis der Stift des Schaltelementes 5 nach oben, vorzugsweise bündig mit der gabelförmigen Oeffnung 3, gedrückt wird. Das Schaltelement 5 schaltet nun den Antrieb 37 für das Kettenrad 12 ein, und der Segmentschieber 4 schliesst die gabelförmige Oeffnung 3. Wird vom Endschalter 20 bestätigt, dass der Segmentschieber 4 vollständig geschlossen ist, wird das Greifergehäuse 2 angehoben und der Körper 6 legt sich auf den Segmentschieber 4 ab, unter gleichzeitiger Betätigung des waagebalkenartigen Hebelsystems 15. Durch Kippen des Hebelsytems 15 wird die mechanische Verriegelung 16 in eine dafür am Greifergehäuse 2 vorgesehene Oeffnung eingerastet. Diese Verriegelung 16 stellt eine zusätzliche Sicherheit dar, dass auch bei einer Fehlmanipulation sich der Segmentschieber nicht ungewollt öffnen kann. Das Ablegen des Körpers erfolgt in umgekehrter Reihenfolge.

## Patentansprüche

1. **.** Vorrichtung zum Greifen von Körpern, vorzugsweise zylindrischen Körpern, mit horizontaler Längsachse, bestehend aus einem Greifergehäuse (2) mit einer nach unten gerichteten gabelförmigen Oeffnung (3) zum Uebergreifen des Körpers (6) und einer Einrichtung zum Verschliessen der gabelförmigen Oeffnung (3), dadurch gekennzeichnet, dass die gabelförmige Oeffnung (3) durch einen im Greifergehäuse (2) geführten Segmentschieber (4) verschliessbar ist und die Verschliess- und Oeffnungsbewegung des Segmentschiebers (4) durch ein in der gabelförmigen Oeffnung (3) angeordnetes Schaltelement (5), das auf eine vertikale Relativbewegung zwischen dem Greifergehäuse (2) und dem Körper (6) anspricht, steuerbar ist.

2. Vorrichtung nach Anspruch 1, dadurch gekennzeichnet, dass der Segmentschieber (4) einen Verschwenkweg von 180° aufweist.

3. Vorrichtung nach Anspruch 1 oder 2, dadurch gekennzeichnet, dass eine Antriebskette (8) an beiden Enden (9, 9') am Segmentschieber (4) angelenkt und in einer Nut an der kreisförmigen Peripherie (7) des Segmentschiebers (4) geführt sowie über Umlenkräder (11, 11') mit einem angetriebenen Kettenrad (12) verbunden ist.

4. Vorrichtung nach einem der Ansprüche 1 - 3, dadurch gekennzeichnet, dass auf einer inneren Lasttragfläche (14) des Segmentschiebers (4) ein Hebelsystem (15) angeordnet ist, das sich beim Anheben des Körpers (6) waagebalkenartig verschwenkt und dabei eine mechanische Verriegelung (16) in der Schliessposition des Segmentschiebers (4) betätigt.

5. Vorrichtung nach einem der Ansprüche 1 - 4, dadurch gekennzeichnet, dass das Schaltelement (5) für den Antrieb des Segmentschiebers (4) aus einem vertikal bewegbaren Abtaststift besteht, der auf der vertikalen Mittelachse (18) der gabelförmigen Oeffnung (3) angeordnet ist und in diese hineinragt.

6. Vorrichtung nach einem der Ansprüche 1 - 5, dadurch gekennzeichnet, dass Vertiefungen (19, 19') an der Peripherie (7) des Segmentschiebers (4) mit Endschaltern (20, 20') Zusammenwirken und die Auf- und Zustellung des Segmentschiebers (4) überwachen.

7. Vorrichtung nach einem der Ansprüche 3 - 6, dadurch gekennzeichnet, dass zwischen einer Antriebsvorrichtung (37) und einer Antriebswelle (34) für den Kettenantrieb (8) eine Rutschkupplung (36) vorgesehen ist.

8. Vorrichtung nach einem der Ansprüche 1 - 7, dadurch gekennzeichnet, dass die Breite (22) der gabelförmigen Oeffnung (3) mindestens 40 % der Breite (23) des Greifergehäuses (2) beträgt.

9. Vorrichtung nach einem der Ansprüche 1 - 8, dadurch gekennzeichnet, dass das Verhältnis der Breite (22) der gabelförmigen Oeffnung (3) zum Aussendurchmesser (25) des Segmentschiebers (4) 1 : 1,4 bis 1 : 1,7 beträgt.

10. Vorrichtung nach einem der Ansprüche 1 - 9, dadurch gekennzeichnet, dass an den beiden Stirnseiten eines Hebebalkens (30) je eine Greifvorrichtung (32, 32') angebracht ist, deren Segmentschieber über eine gemeinsame Antriebswelle (34), die im Hohlraum (35) des Hebebalkens (30) angeordnet ist, antreibbar sind.

11. Verwendung der Vorrichtung nach einem der Ansprüche 1 - 10 zum daran Anhängen von Körpern, dadurch gekennzeichnet, dass mit der gabelförmigen Oeffnung der Körper übergriffen, durch Absenkung des Greifergehäuses das Schaltelement durch den Körper betätigt, anschliessend durch das Schaltelement die Antriebsvorrichtung für den Segmentschieber eingeschaltet, die gabelförmige Oeffnung verschlossen, durch Anheben des Greifergehäuses sich der Körper unter gleichzeitiger Betätigung des waagebalkenartigen Hebelsystems auf den Segmentschieber absetzt und dieser dabei mechanisch verriegelt wird.

## Claims

1. Apparatus for gripping bodies, preferably cylindrical bodies, with a horizontal longitudinal axis, comprising a gripper housing (2) having a downward-directed forked opening (3) for engagement over the body (6) and having a device for closing the forked opening (3), characterized in that the forked opening (3) is closable by means of a segment slide (4) guided in the gripper housing (2) and the closing and opening motion of the segment slide (4) is controllable by means of a switching element (5), which is disposed in the forked opening (3) and responds to a vertical relative movement between the gripper housing (2) and the body (6).

2. Apparatus according to claim 1, characterized in that the segment slide (4) has an angular travel of 180°.

3. Apparatus according to claim 1 or 2, characterized in that a driving chain (8) is coupled at both ends (9, 9') to the segment slide (4) and guided in a groove of the circular periphery (7) of the segment slide (4) and connected by guide wheels (11, 11') to a driven chain wheel (12).

4. Apparatus according to one of claims 1 to 3, characterized in that disposed on an inner load-bearing surface (14) of the segment slide (4) is a lever system (15) which, upon lifting of the body (6), swings like a balance beam and in so doing operates a mechanical lock (16) in the closed position of the segment slide (4).

5. Apparatus according to one of claims 1 to 4, characterized in that the switching element (5) for the drive of the segment slide (4) comprises a vertically movable tracing pin, which is disposed on the vertical centre line (18) of the forked opening (3) and projects into said opening.

6. Apparatus according to one of claims 1 to 5, characterized in that recesses (19, 19') in the periphery (7) of the segment slide (4) cooperate with limit switches (20, 20') and monitor the open and closed position of the segment slide (4).

7. Apparatus according to one of claims 3 to 6, characterized in that a slipping clutch (36) is provided between a drive device (37) and a drive shaft (34) for the chain drive (8).

8. Apparatus according to one of claims 1 to 7, characterized in that the width (22) of the forked opening (3) is at least 40% of the width (23) of the gripper housing (2).

9. Apparatus according to one of claims 1 to 8, characterized in that the ratio of the width (22) of the forked opening (3) to the outside diameter (25) of the segment slide (4) is 1 : 1.4 to 1 : 1.7.

10. Apparatus according to one of claims 1 to 9, characterized in that a gripping apparatus (32, 32') is provided at either end of a lifting beam (30), the segment slides of said gripping apparatuses being drivable by means of a common drive shaft (34) which is disposed in the cavity (35) of the lifting beam (30).

11. Use of the apparatus according to one of claims 1 to 10 for the appending of bodies, characterized in that the forked opening engages over the body, as a result of lowering the gripper housing the body operates the switching element, the switching element switches on the drive device for the segment slide, the forked opening is closed, as a result of lifting the gripper housing the body settles on the segment slide while simultaneously operating the balance beam-like lever system and, in so doing, the segment slide is mechanically locked.

## Revendications

1. Dispositif pour saisir des corps, de préférence des corps cylindriques, présentant un axe longitudinal horizontal, constitué d'un boîtier de saisie (2) doté d'une ouverture (3) en forme de fourche et dirigée vers le bas destinée à coiffer le corps (6) et d'un dispositif pour obturer l'ouverture (3) en forme de fourche, caractérisé en ce que l'ouverture (3) en forme de fourche est susceptible d'être obturée par un coulisseau segmenté (4) guidé dans le boîtier de saisie (2), et en ce que le mouvement de fermeture/ouverture du coulisseau segmenté (4) est susceptible d'être commandé par un élément de commutation (5), agencé dans l'ouverture (3) en forme de fourche, qui réagit à un déplacement relatif vertical entre le boîtier de saisie (2) et le corps (6).

2. Dispositif selon la revendication 1, caractérisé en ce que le coulisseau segmenté (4) présente un trajet de basculement de 180°.

3. Dispositif selon l'une ou l'autre des revendications 1 et 2, caractérisé en ce qu'une chaîne d'entraînement (8) est articulée aux deux extrémités (9, 9') sur le coulisseau segmenté (4), et en ce qu'elle est guidée dans une gorge sur la périphérie circulaire (7) du coulisseau segmenté (4), et qu'elle est reliée par l'intermédiaire de roues de renvoi (11, 11') à une roue à chaîne entraînée (12).

4. Dispositif selon l'une des revendications 1 à 3, caractérisée en ce qu'un système à levier (15) est agencé sur une surface de prise de charge intérieure (14) du coulisseau segmenté (4), ledit système à levier basculant lors du levage du corps (6) à la manière d'une poutre de bascule, et actionnant alors un verrouillage mécanique (16) dans la position de fermeture du coulisseau segmenté (4).

5. Dispositif selon l'une des revendications 1 à 4, caractérisé en ce que l'élément de commutation (5) pour l'entraînement du coulisseau segmenté (4) est constitué par une tige de palpage mobile verticalement, laquelle est agencée sur l'axe médian vertical (18) de l'ouverture (3) en forme de fourche et pénètre dans celle-ci.

6. Dispositif selon l'une des revendications 1 à 5, caractérisé en ce que des creux (19, 19') à la périphérie (7) du coulisseau segmenté (4) coopèrent avec des commutateurs de fin de course (20, 20') et surveillent la position ouverte et fermée du coulisseau segmenté (4).

7. Dispositif selon l'une des revendications 3 à 6, caractérisé en ce qu'il est prévu un accouplement glissant (36) entre un dispositif d'entraînement (37) et un arbre d'entraînement (34) pour l'entraînement à chaîne (8).

8. Dispositif selon l'une des revendications 1 à 7, caractérisé en ce que la largeur (22) de l'ouverture (3) en forme de fourche s'élève à au moins 40% de la largeur (23) du boîtier de saisie (2).

9. Dispositif selon l'une des revendications 1 à 8, caractérisé en ce que le rapport entre la largeur (22) de l'ouverture (3) en forme de fourche et le diamètre extérieur (25) du coulisseau segmenté (4) s'élève de 1:1,4 à 1:1,7.

10. Dispositif selon l'une des revendications 1 à 9, caractérisé en ce que sur les deux côtés frontaux sont montées des poutres de levage (30) de dispositifs de saisie respectifs (32, 32'), dont les coulisseaux segmentés peuvent être entraînés par l'intermédiaire d'un arbre d'entraînement commun (34), qui est agencé dans la cavité (35) de la poutre de levage (30).

11. Utilisation de l'appareil selon l'une des revendications 1 à 10 pour des corps qui y sont suspendus, caractérisé en ce que l'on coiffe le corps au moyen de l'ouverture en forme de fourche, que l'on actionne l'élément de commutation au moyen du corps par abaissement du boîtier de saisie, que l'on met en route ensuite au moyen de l'élément de commutation le dispositif d'entraînement pour le coulisseau segmenté, que l'on referme l'ouverture en forme de fourche, par soulèvement du boîtier de saisie, que le corps s'abaisse sur le coulisseau segmenté en actionnant simultanément le système à levier en forme de poutre de bascule, et que le coulisseau segmenté est alors mécaniquement verrouillé.
